# EUROPÄISCHE PATENTSCHRIFT

(11) **EP 0 527 288 B1**
(45) Veröffentlichungstag und Bekanntmachung des Hinweises auf die Patenterteilung: **25.01.1995**
(21) Anmeldenummer: 92103019.3
(22) Anmeldetag: 22.02.1992
(51) Int. Cl.: B65D 19/44

(54) **Platte zum lagesicheren Halten eines Aufsatzes auf einer Mehrweg-Palette**
Sheet for the safe holding of an upper part upon a returnable palette
Plaque pour maintenir en position un élément supérieur sur une palette réutilisable

(30) Priorität: 09.08.1991 DE 9109872 U
(43) Veröffentlichungstag der Anmeldung: 17.02.1993
(73) Patentinhaber: Gustav Stabernack GmbH, D-36339 Lauterbach (DE)
(72) Erfinder: Schmitt, Paul, D-36341 Lauterbach (DE)
(74) Vertreter: Gudel, Diether

(56) Entgegenhaltungen:
- DE-U- 7 927 412
- DE-U- 9 109 872

## Beschreibung

Mehrweg-Paletten bestehen aus hartem Material, üblicherweise aus Kunststoffmaterial, damit sie mehrfach verwendet werden können. Üblicherweise wird auf eine Mehrweg-Palette ein Warenbehälter aufgesetzt, aus dem die Waren in einem Ladengeschäft abverkauft werden können.

Bei Mehrweg-Paletten besteht das Problem, den zugehörigen Aufsatz (Warenbehälter) lagesicher auf der Palette zu halten. Dabei soll der Aufsatz von der Palette ggfs. leicht getrennt werden können, damit die Palette wieder verwendet werden kann.

Hierzu ist es bekannt, Fortsätze an der Unterseite des aus Faltmaterial bestehenden Aufsatzes von oben in entsprechende Schlitze in der Kunststoffpalette einzusetzen. Für diese Fixierung sind aber Paletten mit Schlitzen Voraussetzung, was nicht immer gegeben ist. Außerdem ist das Einsetzen des ja mit Waren bestückten Aufsatzes in die Schlitze schwierig, weil die relativ engen Schlitze genau getroffen werden müssen. Schließlich ist diese Verbindung auch nicht belastbar genug.

Grundsätzlich wäre es zwar möglich, den Aufsatz an die Palette anzukleben, anzuklammern oder anzutackern, jedoch wird eine derart benutzte Palette dann nicht mehr vom Hersteller zurückgenommen, was also für den Kunden wesentliche preisliche Nachteile mit sich bringt.

Die DE-U-7 927 412 beschreibt eine Platte mit den Merkmalen des Oberbegriffs von Patentanspruch 1. Über Biegelinien wird dort der Rand der Platte nach oben gebogen, so daß sich ein umlaufender, tablettartiger Rand ergibt. Einstückig mit diesen nach oben gebogenen Randstücken sind nach innen weisende, rechteckige Fortsätze angeformt, die beim Biegen also nach unten weisen. Die Abmessungen sind nun so getroffen, daß diese nach unten weisennden Fortsätze sich allseits an die Außenseite der Palette anlegen und dadurch die Platte aus Faltmaterial lösbar mit der Palette verbinden. Diese Verbindung ist aber nicht sehr stabil. Für den umlaufenden Rand wird außerdem zusätzliches Faltmaterial benötigt.

Der Erfindung liegt somit die Aufgabe zugrunde, die Nachteile der bekannten Systeme zu vermeiden und Mittel vorzuschlagen, mit denen ein Aufsatz bei einfacher Handhabung auf einer Mehrweg-Palette lagesicher aufgesetzt und gehalten werden kann. Unter einem derartigen Aufsatz kann man die verschiedensten Gegenstände verstehen, beispielsweise einen Bodenaufsteller in einem Ladengeschäft, einen Container, ein Stapeltray, eine Schütte und andere Gegenstände zum Abverkauf von Waren und auch zu anderen Zwecken.

Die Lösung der Erfindungsaufgabe erfolgt durch die Merkmale von Patentanspruch 1.

Es ist also ein gesondertes Bauteil, nämlich die Platte mit ihren Fortsätzen vorgesehen, das den jeweiligen Anforderungen, insbesondere in Bezug auf die Abmessungen der Palette und ihrer Aufnahmen, gut angepaßt werden kann. Weil es aus Faltmaterial (Wellpappe, Karton oder dgl.) besteht, kann das Bauteil, ggfs. nach mehrfacher Verwendung, gut entsorgt werden.

Die erwähnten Aufnahmen sind vorzugsweise an den Füßen der Mehrweg-Palette ausgebildet, die üblicherweise von oben frei zugänglich sind. Erfindungsgemäß sieht man also eine Platte aus Faltmaterial vor, die dadurch an der Mehrweg-Palette fixiert wird, daß sie mit ihren Füßen von oben in die Aufnahmen der Palette eingreift, wodurch die Platte an der Palette fixiert wird. Auf die Platte wird dann der Aufsatz aufgesetzt und lagesicher gehalten.

Zum lagesicheren Halten des Aufsatzes benötigt man nicht die gesamte Fläche der Platte. Daher bestehen die Fortsätze aus dem Material der Platte. Dadurch spart man Material.

Eine erste Ausführungsform ist dadurch gekennzeichnet, daß das Plattenmaterial zu offenen oder geschlossenen mehrkantigen Rohrstücken gerollt ist, deren Achse senkrecht zur Plattenebene verläuft und die an das Plattenmaterial angelenkt sind. Diese Rohrstücke können sich nach unten verjüngen, wordurch eine besonders gute Klemmwirkung beim Einsetzen der Platte mit ihren Füßen in die Aufnahmen der Palette erzielt wird.

Eine zweite Ausführungsform ist dadurch gekennzeichnet, daß das Plattenmaterial zu offenen oder geschlossenen mehrkantigen Rohrstücken gerollt ist, deren Achse parallel zur Plattenebene verläuft und die an das Plattenmaterial angelenkt sind. Bei dieser Ausführungsform wird man die Rohrstücke miteinander verkleben, sofern sie geschlossen sind, damit sie ihre Lage beibehalten, während dies bei den Rohrstücken, deren Achse senkrecht zur Plattenebene verläuft, nicht unbedingt notwendig ist.

Die Rohrstücke dieser zweiten Ausführungsform können etwa mittig unterteilt sein, wodurch ein rechtes und ein linkes Rohrstück geschaffen wird, die dann in entsprechend Aufnahmen der Palette eingreifen.

Für die lagesichere Fixierung des Aufsatzes an der Platte gibt es ebenfalls mehrere Möglichkeiten. Eine ist dadurch gekennzeichnet, daß die Platte einen umlaufenden Rand aufweist, der eine Größe und Form hat derart, daß der Aufsatz lagesicher gehalten in den umlaufenden Rand eingesetzt werden kann.

Eine zweite Ausführungsform, die ohne den umlaufenden Rand auskommt, ist dadurch gekennzeichnet, daß die Platte eine Größe und Form aufweist derart, daß der Aufsatz mit seinem Fuß über die Platte gesetzt werden kann und dann fixiert ist.

Allgemein sei erwähnt, daß die Anzahl der Fortsätze oder Füße der Platte nicht mit der Anzahl der Füße der Palette übereinstimmen muß; insoweit genügt es, daß die Platte an der Palette lagesicher gehalten ist. Bei vier Füßen der Palette kommt man beispielsweise mit zwei Füßen der Platte aus, die dann vorzugsweise diametral zueinander angeordnet sind. Auch wird man die Abmessungen so treffen, daß die Fortsätze mit ausreichendem Spiel in die Aufnahmen eingesetzt werden, wodurch die Handhabung erleichtert wird.

Die Erfindung wird im folgenden anhand von Ausführungsbeispielen näher erläutert, aus denen sich weitere wichtige Merkmale ergeben. Es zeigt:
- Fig. 1 -: perspektivisch eine Draufsicht auf eine erste Ausführungsform einer erfindungsgemäßen Platte mit umlaufenden Rand, und zwar zur Verdeutlichung von der Unterseite her gesehen;
- Fig. 2 -: eine perspektivische Ansicht entsprechend Fig. 1 bei einer zweiten Ausführungsform, ebenfalls von der Unterseite her gesehen;
- Fig. 3 -: ebenfalls perspektivisch und von der Oberseite her gesehen eine dritte Ausführungsform.

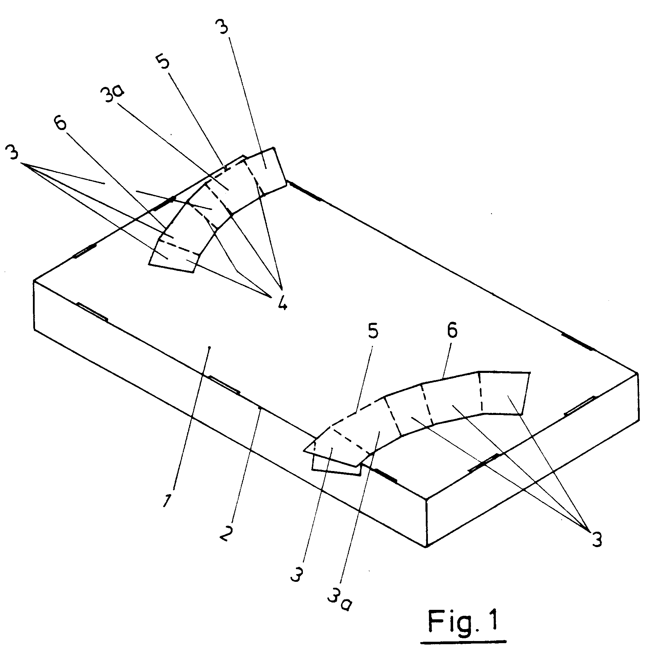

In Fig. 1 ist eine Platte aus Faltmaterial mit einem Boden 1 und mit einem umlaufenden Rand 2 gezeigt. An zwei diametral einander gegenüberliegenden Stellen der Platte 1 sind Felder 3 aus dem Material der Platte ausgestanzt, die über Faltlinien 4 aneinander angelenkt sind, wobei eines der Felder, nämlich das Feld 3a, über eine Faltlinie 5 an das Material der Platte 1 angelenkt ist. Die Felder verjüngen sich nach außen hin konisch. Die Schnittlinien sind bei Pos.6 angedeutet.

Aus dem Material der Felder kann man daher rohrförmige Füße aufrollen, die sich nach unten konisch verjüngen, d.h. in Fig. 1 nach oben. Die Füße oder Fortsätze sind über die Faltlinien 5 an das Material der Platte 1 angelenkt.

Mit aufgerollten Füßen, die nicht notwendigerweise durch Klebung fixiert sein müssen, wird die Platte von oben in die von oben offenen Aufnahmen (Füße) der Mehrweg-Palette aus Kunststoffmaterial eingesetzt und dadurch wird die Platte an der Palette fixiert. Von oben wird ein geeigneter Aufsatz (Warenbehälter) auf die Platte aufgesetzt und durch den umlaufenden Rand an der Platte fixiert, sofern der Rand vorhanden ist; das System funktioniert auch ohne den Rand 2.

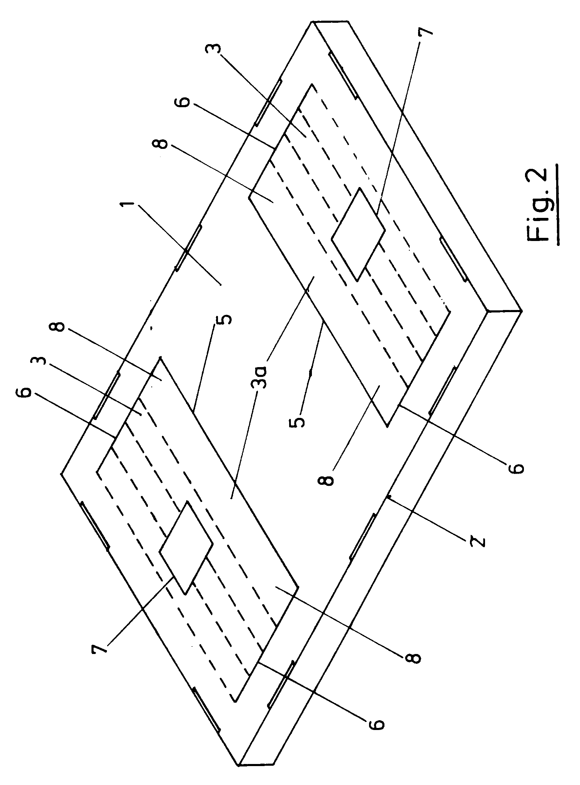

Dieses Prinzip des umlaufenden Randes ist auch in Fig. 2 verwirklicht, wobei aber die Rohrstücke parallel zur Ebene der Platte 1 verlaufen. In Fig.1 verliefen die Rohrstücke dagegen senkrecht zur Plattenebene.

Die Rohrstücke sind in Fig. 2 bei Pos. 7 mittig unterteilt, so daß sich dadurch rechte und linke Füße 8 ergeben, die von oben in die hohlen Füße der Mehrweg-Palette eingesetzt werden.

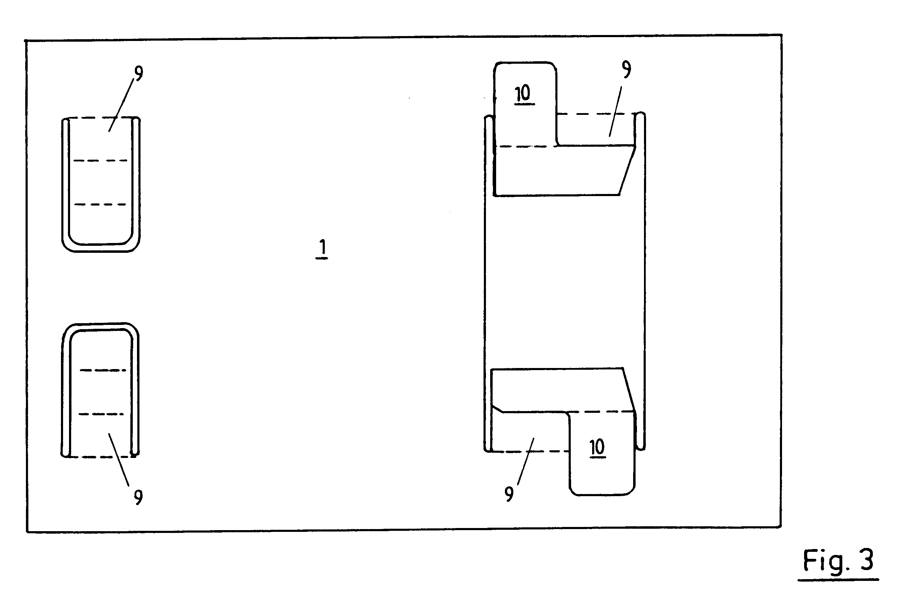

Fig. 3 zeigt eine Platte, bei der an einem Ende U-förmige Fortsätze 9 an den Boden 1 angelenkt sind. Am anderen Ende sind die Fortsätze durch eine Klebelasche 10 zu einem rechteckigen Rohrstück ergänzt, das auf die Oberseite der Platte 1 aufgeklebt ist. Die Anzahl und die Anordnung dieser Fortsätze entspricht hier derjenigen der Aufnahmen (Füße) der zugehörigen Kunstoffpalette. Die Abmessungen der Fortsätze sind kleiner als der Einsteckraum der Aufnahmen, um ein leichtes Einsetzen zu ermöglichen.

Die Platte nach Fig. 1 kann durch den umlaufenden Rand 2 nach Fig. 1 oder 2 auch zu einem Tray ergänzt sein.

## Patentansprüche

1. Platte (1) aus Faltmaterial mit Fortsätzen an ihrer Unterseite zum lagesicheren Halten eines Aufsatzes auf einer Mehrweg-Palette, an der die Fortsätze anliegen,
**dadurch gekennzeichnet,**
daß die Fortsätze als aus dem Plattenmaterial bestehende Rohrstücke ausgebildet sind, die in Aufnahmen an der Oberseite der Palette eingreifen.

2. Platte nach Anspruch 1,
**dadurch gekennzeichnet**,
daß die Platte (1) einen umlaufenden (2) Rand aufweist, der eine Größe und Form hat derart, daß der Aufsatz lagesicher gehalten in den umlaufenden Rand (2) eingesetzt werden kann.

3. Platte nach Anspruch 1,
**dadurch gekennzeichnet**,
daß die Platte (1) eine Größe und Form aufweist derart, daß der Aufsatz mit seinem hohlen Fuß über die Platte gesetzt werden kann und dann fixiert ist.

4. Platte nach einem der Ansprüche 1 bis 3,
**dadurch gekennzeichnet**,
daß Plattenmaterial zu mehrkantigen offenen oder geschlossenen Rohrstücken gerollt ist, deren Achse senkrecht zur Plattenebene verläuft und die an das Plattenmaterial angelenkt sind.

5. Platte nach Anspruch 4,
**dadurch gekennzeichnet**,
daß die Rohrstücke sich nach unten konisch verjüngen.

6. Platte nach einem der Ansprüche 1 - 4,
**dadurch gekennzeichnet**,
daß Plattenmaterial zu mehrkantigen offenen oder geschlossenen Rohrstücken gerollt ist, deren Achse parallel zur Plattenebene verläuft und die an das Plattenmaterial angelenkt sind.

7. Platte nach Anspruch 6,
**dadurch gekennzeichnet**,
daß die Rohrstücke etwa mittig unterteilt sind.

8. Platte nach einem der Ansprüche 1 bis 6,
**dadurch gekennzeichnet**,
daß die mehrkantigen, offenen Rohrstücke ein U-Profil ausbilden.

9. Platte nach Anspruch 8,
**dadurch gekennzeichnet**,
daß das U-Profil durch eine Klebelasche (10) zu einem Viereckprofil ergänzt ist, wobei die Klebelasche mit der Platte (1) verklebt ist.

## Claims

1. A plate (1) of folding material having prolongations at its underside for the positionally-secure holding of a mounted object on a multiple-entry pallet with which the prolongations are in contact, characterised in that the prolongations are in the form of tubular pieces which are composed of the plate material and engage into receivers at the upper side of the pallet.

2. A plate in accordance with Claim 1, characterised in that the plate (1) has an enclosing edge (2) which is such in size and form that the mounted object can be inserted within the enclosing edge (2) so as to be held in a positionally-secure manner.

3. A plate in accordance with Claim 1, characterised in that the plate (1) is such in size and form that the mounted object can be placed with its hollow foot over the plate and is then fixed in position.

4. A plate in accordance with any one of Claims 1 to 3, characterised in that plate material is rolled up into multiple-cornered open or closed tubular pieces whose axis runs perpendicular to the plate plane and which are hinged on the plate material.

5. A plate in accordance with Claim 4, characterised in that the tubular pieces taper conically in the downwards direction.

6. A plate in accordance with any one of Claims 1 - 4, characterised in that plate material is rolled up into multiple-cornered open or closed tubular pieces whose axis runs parallel to the plate plane and which are hinged on the plate material.

7. A plate in accordance with Claim 6, characterised in that the tubular pieces are divided substantially in the centre.

8. A plate in accordance with any one of Claim 1 to 6, characterised in that the multiple-cornered open tubular pieces form a U-shaped profile.

9. A plate in accordance with Claim 8, characterised in that the U-shaped profile is supplemented by means of an adhesive tab (10) to form a rectangular-shaped profile, the adhesive tab being stuck to the plate (1).

## Revendications

1. Plaque (1) en un matériau apte au pliage, comportant des prolongements à son côté inférieur, destinés au maintien en position sûre d'un élément rapporté sur une palette réutilisable, à laquelle sont adjacents les prolongements, caractérisée en ce que les prolongements sont réalisés en tant que pièces tubulaires, à partir du matériau de la plaque, qui s'engagent dans des logements au côté supérieur de la palette.

2. Plaque selon la revendication 1, caractérisée en ce que la plaque (1) présente un bord périphérique (2), qui a une grandeur et un forme telles, que l'élément rapporté peut être inséré dans le bord périphérique en y étant maintenu en position sûre.

3. Plaque selon la revendication 1, caractérisée en ce que la plaque (1) présente une grandeur et une forme telles, que l'élément rapporté est disposé, avec son pied creux, au-dessus de la plaque, et est alors fixé.

4. Plaque selon l'une des revendications 1 à 3, caractérisée en ce que du matériau de la plaque est roulé en des pièces tubulaires polygonales, ouvertes ou fermées, dont l'axe s'étend perpendiculairement au plan de la plaque, et qui sont articulées au matériau de la plaque.

5. Plaque selon la revendication 4, caractérisée en ce que les pièces tubulaires se rétrécissent de manière conique vers le bas.

6. Plaque selon l'une des revendications 1 à 4, caractérisée en ce que du matériau de la plaque est roulé en des pièces tubulaires polygonales, ouvertes ou fermées, dont l'axe s'étend parallèlement au plan de la plaque, et qui sont articulées au matériau de la plaque.

7. Plaque selon la revendication 6, caractérisée en ce que les pièces tubulaires sont subdivisées sensiblement au milieu.

8. Plaque selon l'une des revendications 1 à 6, caractérisée en ce que les pièces tubulaires polygonales, ouvertes, forment un profil en "U".

9. Plaque selon la revendication 8, caractérisée en ce que le profil en "U" est complété en un profil quadrangulaire par une languette de collage (10), celle-ci étant collée avec la plaque (1).
